# EUROPEAN PATENT SPECIFICATION

(11) **EP 0 983 446 B1**
(45) Date of publication and mention of the grant of the patent: **13.08.2003**
(21) Application number: 99907980.9
(22) Date of filing: 17.03.1999
(51) Int. Cl.: F16B 45/00, F16B 35/06

(54) **SCREW CONNECTOR AND METHOD OF CONNECTING ELEMENTS USING SUCH A SCREW CONNECTOR**
SCHRAUBVERBINDER UND VERFAHREN ZUM VERBINDEN VON ELEMENTEN ANHAND SOLCHEM SCHRAUBVERBINDER
FERRURE D'ASSEMBLAGE A VIS ET PROCEDES D'ASSEMBLAGE D'ELEMENTS AU MOYEN DE CETTE FERRURE D'ASSEMBLAGE

(30) Priority: 19.03.1998 PL 32543498
(43) Date of publication of application: 08.03.2000
(73) Proprietor: Mostostal-Projekt S.A., 00926 Warszawa (PL)
(72) Inventor: CZECHOWSKI, Andrzej, PL-01-485 Warszawa (PL)
(74) Representative: Jacquard, Philippe Jean-Luc
(86) International application number: PL9900008
(87) International publication number: WO99047822

(56) References cited:
- GB-A- 217 038
- GB-A- 2 027 509
- US-A- 5 433 569

## Description

The present invention relates to a screw connector and a method of connecting elements of metal constructions.

A bolt with an eye head comprising of a threaded shank and a flat oval head with a hole is already known, see e.g. GB-A-217 038.

Beam-to-column connections, in which apart from bolts, additional connecting devices are used, made up of an angle or rolled tees, are already known. Joints of this type, as a result of substantial deformation of connecting devices, show a relatively high flexability as well as a not very great strength. According to the present invention, joints using screw connectors together with standard bolts and nuts are useful alternative solutions in these areas, while being simple and more constructable, since they do not need any additional connecting devices.

From the description of the Polish utility model No. 37679, the screw connector for connecting steel rolled sections is already known. This connector consists of a bolt and a nut with grooves on them as well as from a rolled section in which there are cuts allowing for the fitting of a nut as well as a jointed section with a hole through which a bolt is fitted through a bent back cover plate.

The aim of the present invention is the realisation of different types of connections, particulary so-called T-joints both single and double sided, ordinary and pre-loaded.

Screw connectors are useful for making temporary connections, which are suitable for the proper stabilisation of elements before realisation of the final welded joints.

The connector consist of a threaded shank with a flat head in which there is a circular hole, while the thickness of the head is smaller than the diameter of the shank. The head of the connector has one plane limiting it at a tangent to the surface of the shank, while the second plane at a shorter distance from the shank axis transforms into a single sided bevel in the transition zone between the shank and the head. Preferably, the thickness of the head is equal to half of the diameter of the shank, while the ratio of the slope of the bevel plane to the plane of the head is equal to 1: 1.

According to the present invention, the method of connecting elements is defined in claim 1.

According to a further embodiment of the present invention, the method of connecting elements is that the perpendicular element is joined with the base element by means of two connectors according to the invention as well as by means of the bolt, in such a way that the heads of the connectors are in contact on both sides with the perpendicular element and the shanks go through the hole of the base element while the bolt goes through the connector heads and the hole of the perpendicular element, after which the nuts are thightened and the double sided T-joint is obtained.

Preferably in the double sided T-joint, at least one distance plate is placed at a tangent to the perpendicular element.

Preferably in the single or double sided T-joint, the distance element is placed at a tangent to the base element.

According to a further embodiment of the invention, the method of connecting elements is based on the fact that the shank of the connector, having first the nut placed on it, is then screwed into the threaded hole of the base element; then the nut is thightened, stabilising the position of the connector in relation to the base element, as a result of which a sort of screw type joint is obtained.

The method of connecting elements is based on the fact that the shank of one connector is placed in the hole of the head of the second connector, next the nuts placed on the through shank on both sides of the head are tightened, stabilising the connectors in the required position and a through joint of two connectors is thus obtained.

The method of connecting elements is based on the fact that at least two connectors are overlapping by heads using a central through-connector, obtaining in this way a lap joint.

In a further embodiment, the method of connecting elements relates to the fact that two connectors, whose thickness of the head is equal to one half of the diameter of the shank are connected in such a way that the axis of the shank lie in the contact plane.

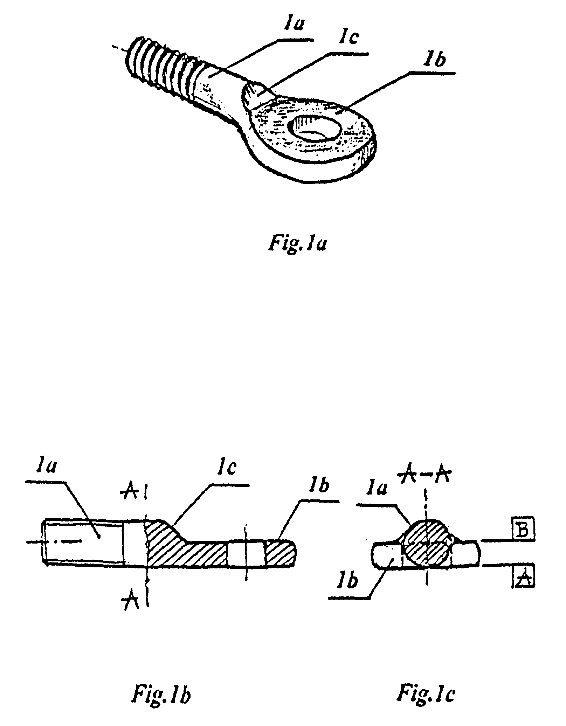

The present invention is explained in examples of realisation in the attached drawings, in which Fig. 1a - shows the connector in perspective view. Fig. 1b - shows the connector in a longitudinal section, Fig. 1c - shows the connector in a section along the A-A line of Fig. 1b, Fig.2 - shows the method of connecting the elements, to obtain a single sided T-joint, Fig.3.- shows the method of connecting the elements, to obtain a double sided T-joint, and Fig.4 - shows the different applications of the screw connectors in various combinations.

The present invention comprises a screw connector manufactured using the method of plastic forming, in the form of a threaded shank 1a and a flat head 1b with a circular hole.

The thickness of the connector head 1b is smaller than the diameter of its shank 1a, while one plane A limiting the head 1b at a tangent to the surface of the shank, and the second plane B at a shorter distance from the shank axis transforms into a single side bevel 1c in the transition zone between the shank 1a and the head 1b. The thickness of the head 1b, in the preferable use of the invention, is equal to half of the diameter of the shank 1a, while the ratio of the slope of the bevel plane 1c to the plane B of the head 1b is equal to 1: 1.

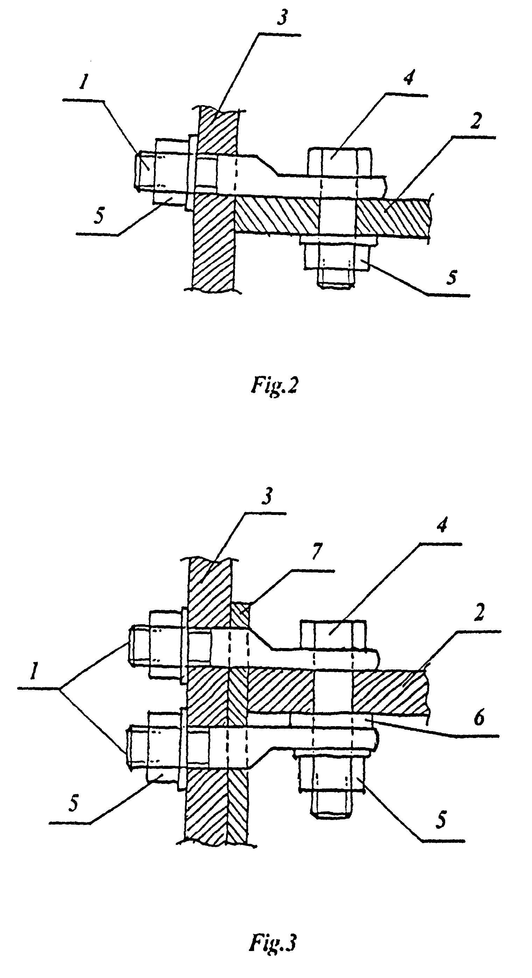

Fig. 2-4 show the different methods of connecting elements using the connector 1, according to the present invention.

Fig. 2 illustrates the method of connecting elements, in which the perpendicular element 2 is joined with the base element 3 by means of the screw connector 1 as well as by means of the standard bolt 4 in such a way that the head 1b of the connector 1 is in contact with the perpendicular element 2 and its shank 1a goes through the hole of the base element 3, while the bolt 4 goes through the hole of the connector 1 head and the hole of the perpendicular element 2, after which the nuts 5 are thightened and the single sided T-joint is obtained. In this joint, at least one distance plate 6 is placed at a tangent to the perpendicular element 2 and/or a distance element 7 at a tangent to the base element 3. Instead of the distance plate and distance element, one element can be used for instance in the form of an angle.

Fig. 3 illustrates the method of conneting elements, in which the perpendicular element 2 is joined with the base element 3 by means of two screw connectors 1 as well as by means of the bolt 4 in such a way that the heads 1b of the connectors 1 are in contact on both sides with the perpendicular element 2 and the shanks 1a go through the hole of the base element 3, while the bolt 4 goes through the connector heads 1 and the hole of the perpendicular element 2, after which the nuts 5 are thightened and the double sided T-joint is obtained. Preferably, in this joint, at least one distance plate 6 is placed at a tangent to the perpendicular element 2 and/or a distance element 7 at a tangent to the base element 3. Instead of the distance plate and distance element can be used one element, for instance in the form of an angle.

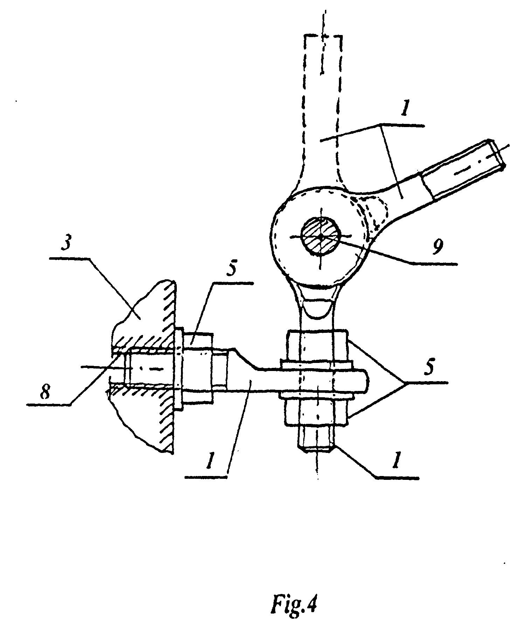

Fig. 4 illustrates a number of examples relating to the methods of connecting elements. The shank of the screw connector 1, after first having the nut 5 placed on it, is screwed into the threaded hole 8 of the base element 3; and then after thightening the nut 5, the position of the connector 1 in relation to the base element 3 is stabilised, as a result of which a sort of screw type joint is obtained. The shank of one screw connector 1 is placed in the hole of the head of the second connector 1, next both nuts 5 placed on the through shank on both sides of the head are tightened, stabilising the connectors 1 in the required position, as a result of which a through joint of two connectors is obtained. Two screw connectors 1 are overlapping by heads using a central trough-connector 9, obtaining in this way a lap joint. In the preferable use of the invention, two screw connectors 1, whose thickness of the head 1b is equal to one half of the diameter of the shank 1a are connected in such a way that the axis of the shank lie in the contact plane.

The screw connector is to be used for connecting mutually othogonal elements without additional connecting devices, such as angles and tees, especially for realisation of the T-joints between beam sections.

The screw connectors with overlaping heads may be used for the realisation of pin connections or other joints on one central - through connector.

The screw connectors may also be used for constructing racks and other assemblies with a large multiple versatility and a continuous regulation.

## Claims

1. A method of connecting metal elements (1, 2) comprising the steps of:
- using a screw connector (1) in a form of a threaded shank (1a) and a flat oval-shaped head (1b) with a hole, the thickness of the head (1b) being smaller than the diameter of the shrank (1a) and equal or greater than half the diameter of said shank (1a), wherein one plane (A) limiting the head (1b) is tangent to the surface of the shank, and the second plane (B), at a shorter distance from the shank axis, transforms into a single sided bevel (1c) in a transition zone between the shank (1a) and the head (1b), and
- joining a perpendicular element (2) with a base element (3) by means of said screw connector (1) together with a bolt (4) in such a way that the head (1b) of the connector (1) is in contact with the perpendicular element (2) and the shank (1a) goes through a hole of the base element (3), while the bolt (4) goes through the connector head (1b) and a hole of the perpendicular element (2), after which nuts (5) are tightened and the single sided T-joint is obtained.

2. A method of connecting elements according to claim 1, **characterized in that** the perpendicular element (2) is joined with the base element (3) by means of two screw connectors (1) together with the bolt (4) in such a way that the heads (1b) of the connectors (1) are in contact on both sides with the perpendicular element (2) and the shanks (1a) go through the hole of the base element (3), while the bolt (4) goes through the connector heads (1b) and the hole of the perpendicular element (2), after which the nuts (5) are tightened and the double sided T-joint is obtained.

3. A method of connecting elements according to claim 2, **characterized in that** in the T-joint is placed at a tangent to the perpendicular element (2).

4. A method of connecting elements according to any of claims 1 to 3, **characterized in that** a distance element (7) is placed at a tangent to the base element (3).

5. A method of connecting elements according to any of claims 1 to 4, **characterized in that** it comprises the steps of:
- screwing the shank (1a) of the screw connector (1), having first the nut (5) placed on it, into a threaded hole (8) of the base element (3), and
- after tightening the nut (5), stabilizing the position of the connector (1) in relation to the base element (1) so as to obtain a screw type joint.

6. A method of connecting elements according to claim 2, **characterized in that** it comprises the steps of:
- placing the shank (1a) of one connector (1) in the hole of the head of the second connector (1), tightening the nuts (5) placed on the through shank on both sides of the head, and
- stabilizing the connectors (1) in the required position, so as to obtain a through joint of two connectors.

7. A method of connecting elements according to claim 2 or 6, **characterized in that** at least two connectors (1) are overlapping by heads using a central through-connector (9), so as to obtain a lap joint.

8. A method of connecting elements according claim 7, **characterized in that** two screw connectors (1), whose head (1b) thickness is equal to half of the diameter of the shank (1a), are connected so that the axis of the shank lie in the lap plane.

## Patentansprüche

1. Verfahren zum Verbinden von Metallelementen (1, 2) umfassend die Schritte:
Verwenden eines Schraubenverbindungsteils (1) in Form eines Schaftes (1a) mit Gewinde und eines flachen ovalförmigen Kopfes (1b) mit einem Loch, wobei die Dicke des Kopfes kleiner als der Durchmesser des Schaftes (1a) und gleich oder größer als der halbe Durchmesser des Schaftes (1a) ist, wobei eine den Kopf (1b) begrenzende Ebene (A) die Oberfläche des Schaftes tangiert, und die zweite Ebene (B) an einer kürzeren Entfernung von der Schaftachse in eine einseitige Fase (1c) in einem Übergangsbereich zwischen dem Schaft (1a) und dem Kopf (1b) übergeht, und
Verbinden eines senkrechten Elementes (2) mit einem Basiselement (3) durch das Schraubenverbindungsteil (1) zusammen mit einem Bolzen (4) derart, dass der Kopf (1b) des Verbindungsteils (1) mit dem senkrechten Teil (2) in Kontakt ist und der Schaft (1a) durch ein Loch des Basiselements (3) geht, während der Bolzen (4) durch den Verbindungsteilkopf (1b) und ein Loch des senkrechten Elements (2) geht, wobei anschließend Muttern (5) angezogen werden und das einseitige T-Verbindungsstück erhalten wird.

2. Verfahren zum Verbinden von Elementen nach Anspruch 1, **dadurch gekennzeichnet, dass** das senkrechte Element (2) mit dem Basiselement (3) durch zwei Schraubenverbindungsteile (1) zusammen mit dem Bolzen (4) derart verbunden wird, dass die Köpfe (1b) der Verbindungsteile (1) auf beiden Seiten mit dem senkrechten Element (2) in Kontakt sind und die Schäfte (1a) durch das Loch des Basiselements (3) durchgehen, während der Bolzen (4) durch die Verbindungsteilköpfe (1b) und das Loch des senkrechten Elements (2) durchgeht, wobei anschließend die Muttern (5) festgezogen werden und das doppelseitige T-Verbindungsstück erhalten wird.

3. Verfahren zum Verbinden von Elementen nach Anspruch 2, **dadurch gekennzeichnet, dass** das T-Verbindungsstück gemäß einer Tangente an dem senkrechten Element (2) platziert wird.

4. Verfahren zum Verbinden von Elementen nach einem der Ansprüche 1 bis 3, **dadurch gekennzeichnet, dass** ein Abstandselement (7) gemäß einer Tangente an dem Basiselement (3) platziert wird.

5. Verfahren zum Verbinden von Elementen nach einem der Ansprüche 1 bis 4, **dadurch gekennzeichnet, dass** es umfasst die Schritte:
Schrauben des Schaftes (1a) des Schraubenverbindungsteils (1) in ein Gewindeloch (8) des Basiselements (3), wobei zuerst die Mutter (5) auf ihm angebracht wird, und
nachdem die Mutter (5) festgezogen worden ist, Stabilisieren der Position des Verbindungsteils (1) bezüglich des Basiselements (3), um so ein schraubenartiges Verbindungsstück zu erhalten.

6. Verfahren zum Verbinden von Elementen nach Anspruch 2, **dadurch gekennzeichnet, dass** es umfasst die Schritte:
Platzieren des Schaftes (1a) des einen Verbindungsteils in dem Loch des Kopfes des zweiten Verbindungsteils (1), Festziehen der auf dem durchgehenden Schaft angebrachten Muttern auf beiden Seiten des Kopfes, und
Stabilisieren der Verbindungsteile (1) in der erforderlichen Position, um ein durchgehendes Verbindungsstück der zwei Verbindungsteile zu erhalten.

7. Verfahren zum Verbinden von Elementen nach Anspruch 2 oder 6, **dadurch gekennzeichnet, dass** sich zumindest zwei Verbindungsteile (1) bei den Köpfen überlappen, wobei ein zentrales durchgehendes Verbindungsteil (9) verwendet wird, um so eine Überlappung zu erhalten.

8. Verfahren zum Verbinden von Elementen nach Anspruch 7, **dadurch gekennzeichnet, dass** zwei Schraubenverbindungsteile (1), deren Kopf(1b)-Dicke gleich der Hälfe des Durchmessers des Schaftes (1a) ist, derart verbunden werden, dass die Achse des Schaftes in der Überlappungsebene liegt.

## Revendications

1. Procédé pour connecter des éléments métalliques (1, 2) comprenant les étapes consistant à :
- utiliser un connecteur à vis (1) sous la forme d'une tige filetée (1a) et d'une tête (1b) en forme d'ovale comprenant un trou, l'épaisseur de la tête (1b) étant inférieure au diamètre de la tige (1a) et égale ou supérieure à la moitié du diamètre de ladite tige (1a), dans lequel un plan (A) limitant la tête (1b) est tangent à la surface de la tige, et le second plan (B), à une distance plus courte de l'axe de la tige, se transforme en une équerre (1c) à un seul côté dans une zone de transition entre la tige (1a) et la tête (1b), et
- assembler un élément perpendiculaire (2) avec un élément de base (3) au moyen dudit connecteur à vis (1) conjointement avec un boulon (4), de telle sorte que la tête (1b) du connecteur (1) soit en contact avec l'élément perpendiculaire (2) et que la tige (1a) traverse un trou de l'élément de base (3), tandis que le boulon (4) traverse la tête (1b) du connecteur et un trou de l'élément perpendiculaire (2), après quoi des écrous (5) sont serrés et l'assemblage en T à un seul côté est obtenu.

2. Procédé pour connecter des éléments selon la revendication 1, **caractérisé en ce que** l'élément perpendiculaire (2) est assemblé à l'élément de base (3) au moyen de deux connecteurs à vis (1), conjointement avec le boulon (4), de telle sorte que les têtes (1b) des connecteurs (1) soient en contact sur les deux côtés avec l'élément perpendiculaire (2) et que les tiges (1a) traversent le trou de l'élément de base (3), tandis que le boulon (4) traverse les têtes (1b) de connecteur et le trou de l'élément perpendiculaire (2), après quoi les écrous (5) sont serrés et l'assemblage en T à deux côtés est obtenu.

3. Procédé pour connecter des éléments selon la revendication 2, **caractérisé en ce que** l'assemblage en T est placé en étant tangent à l'élément perpendiculaire (2).

4. Procédé pour connecter des éléments selon l'une quelconque des revendications 1 à 3, **caractérisé en ce qu'**un élément de distance (7) est placé en étant tangent à l'élément de base (3).

5. Procédé pour connecter des éléments selon l'une quelconque des revendications 1 à 4, **caractérisé en ce qu'**il comprend les étapes consistant à :
- visser la tige (1a) du connecteur à vis (1), en plaçant d'abord l'écrou (5) sur ladite tige, à l'intérieur d'un trou taraudé (8) de l'élément de base (3), et
- après avoir serré l'écrou (5), stabiliser la position du connecteur (1) par rapport à l'élément de base (1), de manière à obtenir un assemblage de type à vis.

6. Procédé pour connecter des éléments selon la revendication 2, **caractérisé en ce qu'**il comprend les étapes consistant à :
- placer la tige (la) d'un connecteur (1) dans le trou de la tête du second connecteur (1), serrer les écrous (5) placés sur la tige continue sur les deux côtés de la tête, et
- stabiliser les connecteurs (1) dans la position souhaitée, de manière à obtenir un assemblage continu des deux connecteurs.

7. Procédé pour connecter des éléments selon la revendication 2 ou 6, **caractérisé en ce qu'**au moins deux connecteurs (1) sont chevauchés par des têtes en utilisant un connecteur continu (9) central, de manière à obtenir un assemblage par recouvrement.

8. Procédé pour connecter des éléments selon la revendication 7, **caractérisé en ce que** deux connecteurs de vis (1), dont l'épaisseur de la tête (1b) est égale à la moitié du diamètre de la tige (1a), sont connectés de sorte que l'axe de la tige repose dans la plan du recouvrement.
